# EUROPEAN PATENT SPECIFICATION

(11) **EP 3 801 932 B1**
(45) Date of publication and mention of the grant of the patent: **19.07.2023**
(21) Application number: 18730728.5
(22) Date of filing: 07.06.2018
(51) Int. Cl.: B07C 5/00

(54) **INSPECTION PROCESS AND SYSTEM**
VERFAHREN UND VORRICHTUNG ZUM INSPIZIEREN
PROCÉDÉ ET SYSTÈME D'INSPECTION

(43) Date of publication of application: 14.04.2021
(73) Proprietor: Wilco AG, 5610 Wohlen (CH)
(72) Inventor: STIRNIMANN, Christian, 8105 Regensdorf (CH)
(74) Representative: Troesch Scheidegger Werner AG
(86) International application number: PCT/EP2018/065078
(87) International publication number: WO 2019/233587

(56) References cited:
- DE-A1- 19 644 163
- US-A1- 2005 027 392

## Description

### TECHNICAL FIELD OF THE INVENTION

The current invention relates to an inspection process, particularly for the optical inspection of pharmaceutical products.

### DESCRIPTION OF THE RELATED ART

Known embodiments of such inspection processes use automatic visual inspection apparatus (AVI) with cameras to detect defects, for example defects in containers or particles within containers. Faulty products can be sorted out to a rejection path. Due to the image quality, the inclusion of bubbles in the liquid in a container or other interferences, a considerable number of products are mistakenly labelled as being faulty. To reduce these numbers, specific features can be used to supply faulty labelled products to a retest path. These products are subsequently checked by a trained inspector or a semiautomatic apparatus, which perform a final pass/fail evaluation. For this, the products to be retested must be supplied to an inspection process, once again. This is time consuming and inefficient.

DE-A-196 44 163 discloses an inspection process or system for letters comprising sorting or video coding by an inspector. T

### SUMMARY OF THE INVENTION

In the current invention, it is a task to provide an inspection process, with which the above-mentioned drawbacks can be prevented.

This task is solved by a process with the features of claim 1. Further embodiments of the process, as well as an inspection system are defined by the features of further claims.

An inspection process according to the invention comprises the steps of:
- providing at least one container to an inspection apparatus through an inlet;
- identifying the at least one container;
- transmitting an identification feature of the eat least one container to a control system;
- inspecting the at least one container for intrinsic, extrinsic or inherent defects;
- assigning the inspection data to the at least one container;
- assigning a first assessment to the at least one container based on the result of the inspection;
- saving the identification feature together with the inspection data and the first assessment to a raw data storage as a data package;
- sorting the at least one container to a pass path if the first assessment is "pass" or sorting the at least one container to a reject path if the first assessment is "reject" or sorting the at least one container to a retest path if the first assessment is "retest";
if the first assessment is "retest":
- processing the data package in preparation of a virtual inspection by an inspector;
- providing the processed data package with a data space for a second assessment;
- saving the processed data package to a processed data storage;
- providing the processed data storage to the inspector;
- assigning the second assessment to the data space of the processed data package;
- saving the processed data package together with the second assessment to a result data storage;
- sorting the at least one container to one of pass path, reject path and further path based on the second assessment.

For example, the container can be an empty container or a container containing a liquid, for example a pharmaceutical container, such as a vial, a bottle, a syringe, an ampoule, a carpule, an infusion bag, an infusion bottle, a BFS-ampoule (blow-fill-seal manufactured), a BFS-bottle, a blister, a tablet blister, an Autoinjector, a Metered-dose inhaler (MDI). All these containers can be made from glass or plastic. The content of such a container can be a fluid, such as a liquid, a gel or a gas. Alternatively, the content may be lyophilized material or a powder or a suspension. The inspection apparatus can comprise an inlet comprising a conveyor, a reading and/or marking unit, an inspection, a sorting unit, a control system, a storage system and an outlet comprising at least one path comprising a conveyor. The identifying can be done before or after the inspecting. The inspecting of the container, the assigning of the inspection date, the assigning of a first assessment and the saving to a raw data storage can be done once or can be done repeatedly. For example, a first area of interest can be inspected in one inspection station and a second area of interest can be inspected in another inspection station. Alternatively, if the first inspection produced an ambiguous result, the first inspection can be repeated. It is also possible to have several stages of first inspections, i.e. to have a level one inspection and if the level one inspection is ambiguous, to have a more extensive level two inspection. The area of interest or the region of interest, is defined as the area or region, in which a defect can be expected and thus is inspected. The sorting, based on the first or second assessment, can be done after the inspecting or later and with another inspection apparatus, respective sorting apparatus. The raw data storage, the processed data storage and the result data storage can be different entities, or they can be identical or can be stored on an identical device.

According to the invention, the first assessment can be selected from the group comprising pass, reject and retest. It is possible to foresee more than one retest assessment. For example, a further assessment could be retest, because there might be an undesired particle in the container or because the container itself comprises an undesired inclusion or has a defect, such as scratches or bumps. In general, intrinsic, extrinsic and inherent defects can be detected and can serve as a basis for the first assessment. Possible particle inclusions may comprise metal, plastic, fibers, hairs or the like. If no defects have been detected, the container receives the assessment pass. If one or more clear defect has been detected, the assessment is reject. It is possible to categorize the defects, such as particle rejection or cosmetic rejection, i.e. cap defects or defects in the side wall or bottom of a container. The assessment can be retest, if, for example, a plurality of inclusions has been detected. In this case, there can be in fact a plurality of inclusions or there can be only air bubbles within the container. Alternatively, if there is an incorrect position correction, i.e. the test window could not be positioned correctly, the assessment is also set to retest. If the tracking of an object doesn't allow for a clear identification, i.e. bubble or particle, the assessment is also set to retest.

According to the invention, the second assessment can be selected from the group comprising pass, reject and further. Obviously, the second assessment can comprise the same assessments as the first assessment but can also comprise further assessments.

In an embodiment, the first assessment and/or the second assessment comprises a classification. It is possible to classify the defects and use the classification for sorting the container. For example, all rejected container and/or container to be retested can be sorted by classification. The data of the retested container, i.e. the data from the second assessment can be used to improve the first assessment. The container that received the first assessment pass can also comprise a classification, for example, container foreseen for random inspection. The random inspection of good products can be used to guarantee the quality of the assessment process.

In an embodiment, the identifying is done by detecting a provided identification feature on the at least one container and/or by applying an identification feature to the at least one container. Generally, any identification feature is possible, that allows the individual identification of each container.

In an embodiment, the identification feature can be selected from the group comprising alphanumeric code, matrix code, bar code, Inkjet coding, laser coding, electronic coding on a chip. Other identification features such as RFID are also possible.

In an embodiment, the identification feature is an electronic coding on a chip and wherein the chip comprises the raw data storage, the processed data storage and the result data storage. The above-mentioned storages can be part of a single storage or can be part of storages that are separate from one another.

In an embodiment, the inspecting comprises the steps of:
- taking a picture of the at least one container; and
- assessing the taken pictures based on predefined criteria. The taking of a picture can be done by a camera. It is possible to use a camera for the detection of visual light, infrared light, ultraviolet light or other electromagnetic radiation, such as x-ray.

The taking of a picture may comprise the taking of a sequence of pictures, i.e. several pictures or a movie. It is possible to rotate the container to be able to take pictures from the specimen from all directions. It is possible to use any means to set inclusions into motion, such as vibration or stimulation by sound.

In an embodiment, the processing comprises the steps of:
- identifying critical areas of the at least one container based on the taken picture and the predefined criteria; and
- emphasizing the critical areas in the taken picture.

Any processing step can be done that simplifies the inspection of the critical areas by a human inspector. For example, in the case the container has been rotated during the inspection and pictures have been taken from all directions, the sequence of pictures can be joined to form a flat projection of the surface of the container. For example, after each picture, the container is rotated by 60 degrees and a total of six pictures is taken to cover a 360 degrees view of the container. However, any number of pictures with a corresponding angular rotation of the container is possible. It is possible to take more pictures with a smaller image area to obtain a higher resolution of the overall picture. Alternatively, overlapping pictures can be taken to increase the quality of the overall picture.

In an embodiment, the emphasizing is done by marking the critical areas and/or by enlarging the critical areas and/or by increasing the contrast of the critical areas and/or by applying a color filter to the critical areas. In the case, where several pictures have been taken or a movie has been recorded, all static elements can be eliminated by means of a subtraction process, and the moving elements can be highlighted. This is particularly suitable for particle inspection.

The features of the above-mentioned embodiments of the inspection process can be used in any combination, unless they contradict each other.

An inspection system for carrying out the inspection process according to the invention, comprises
at least one inspection apparatus with an inlet for container to be inspected,
at least one reading and/or marking unit for identifying the container to be inspected,
at least one control system,
an inspection for inspecting the container, for intrinsic, extrinsic or inherent defects,
at least one sorting unit with at least three outlets, wherein each container can be directed to one of the at least three outlets, based on the result of the inspection,
a raw data storage for storing a data package comprising the identification of the container, the inspection data and a first assessment, based on the result of the inspection,
a processor for processing the data package,
a processed data storage for storing the processed data package,
a virtual inspection with a workspace for an inspector, who assigns a second assessment to the processed data package and
a result data storage for storing the processed data package together with the second assessment.

### BRIEF DESCRIPTION OF THE DRAWINGS

Embodiments of the current invention are described in more detail in the following with reference to the figures. These are for illustrative purposes only and are not to be construed as limiting. It shows
Fig. 1 a schematic depiction of a first inspection apparatus according to the invention;
Fig. 2 a schematic depiction of the virtual inspection according to the invention; and
Fig. 3 a schematic depiction of a second inspection apparatus according to the invention.

### DETAILED DESCRIPTION OF THE INVENTION

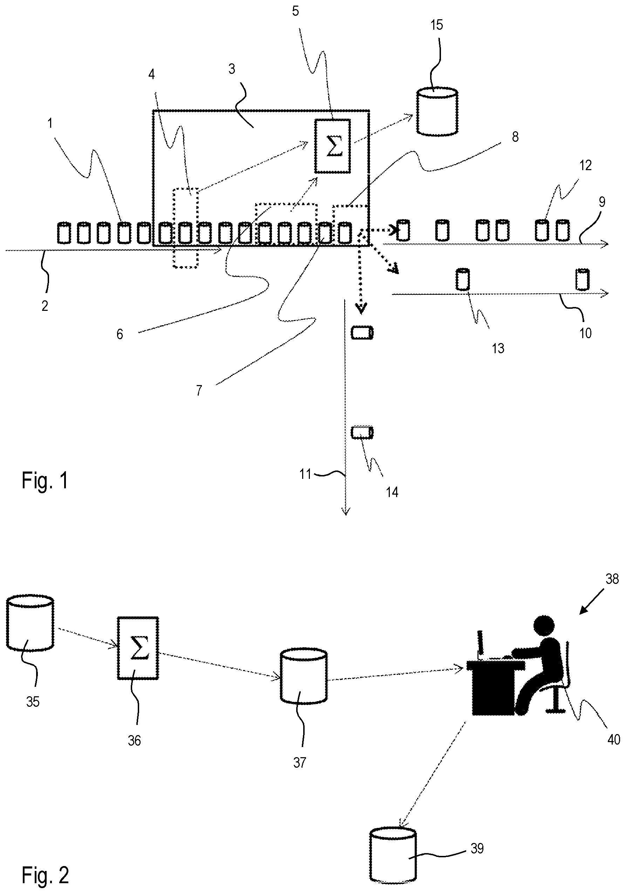

Figure 1 shows a schematic depiction of a first inspection apparatus 3 according to the invention. The first inspection apparatus 3 comprising an inlet 2 for providing uninspected container 1, in the depicted case containers 1 to a reading/marking unit 4, where the container 1 can be identified, for example by detecting an identification feature on the container or by applying an identification feature to the container. The identification feature is transmitted to a control system 5. From the reading/marking unit 4, the still untested containers 1 are transported to an inspection 6, where the container 1 are inspected by an automatic visual inspection (AVI). The inspection is carried out by taking an optical picture of the container 1, assigning the inspection data in the form of the taken picture to the respective container 1 and by comparing the taken picture with predefined criteria. Based on this comparison, a first assessment is made, and its result is assigned to the respective container 1. In the depicted case the first assessment comprises pass, reject and retest. The identification feature together with the inspection data and a first assessment are saved to, respectively stored in a raw data storage 15 as a data package. The first inspection apparatus 3 further comprises a sorting unit 8, which sorts the containers 1 based on the result of the inspection, i.e. based on the first assessment. The containers that received the assignment pass will be guided to the pass path 9 and the containers that received the assignment reject, will be guided to the reject path 10. Only the containers on the pass path 9 meet the predefined requirements and are allowed for further use. The rejected containers will be excluded from further use. The container that received the assignment retest, will be guided to the retest path 11. From there, they will be conveyed to a retest area or they will be temporarily stored before they are transported to a retest area. It would also be possible to guide all containers to the same path and do the sorting at a later stage. This is possible, as each container has an individual identification feature and each individual assessment has been assigned to its container. The reading/marking unit 4, the inspection 6, the sorting unit 8, the raw data storage 15, the conveying of the containers 1 at the inlet 2 and within the first inspection apparatus 3, as well as the conveying of the pass path 9, the reject pass 10 and the retest path 11 are operatively connected to the control system 5. The operative connection can be cable-based or wireless.

Figure 2 shows a schematic depiction of the virtual inspection according to the invention. The virtual inspection can be performed remote from the first inspection apparatus 3. The raw data storage 15, respectively the data saved on the raw data storage 15 needs to be provided to the virtual inspection. To emphasize this, the raw data storage has been given a new reference number, i.e. 35. A processor 36 extracts relevant information from the data packages contained on the raw data storage 35. The existing information can be depicted differently, or additional information can be added. The goal of the processing is to provide the inspector with optimized date for him to analyze. The processed data, i.e. the processed data package is subsequently saved to a processed data storage 37. The processed data storage 37 can be identical to the raw data storage 35. The processing and saving, respective storing can be done at the first inspection apparatus 3, controlled by the control system 5 or it can be done remote from the first inspection apparatus 3. Each processed date is inspected and assessed individually in an inspection 38 by a human inspector 40. The inspector assigns a second assessment to each processed data package. The second assessment can be pass, reject or other, wherein other can also be retest or use for training. The second assessment, together with the data processed data package are saved to a result data storage 39. The result data storage 39 can be identical with the processed data storage 37, respectively with the raw data storage 35. The reading and saving of the data package can be done by a computer, such as a desktop, a laptop, a tablet, a smart phone or the like.

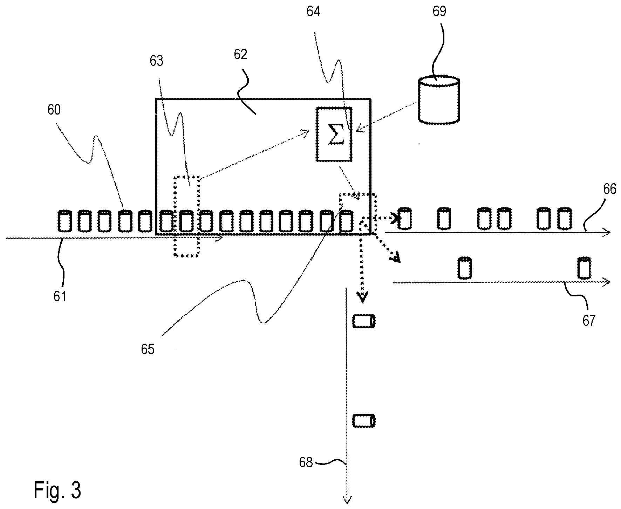

Figure 3 shows a schematic depiction of a second inspection apparatus 62 according to the invention. The retested container 60 are provided to the second inspection apparatus 62 by the inlet 61. A reading unit 63 is arranged in the second inspection apparatus 62 adjacent to the inlet 61. The data from the reading unit 63 is transmitted to a control system 64, allowing the identification of each container 60. The control system 64 causes a sorting unit 65, which is arranged after the reading unit 63 in the conveying direction, to sort the containers 60 according to the second assessment assigned to each container. The control system 64 obtains the second assessment from the result data storage 69. Again, to emphasize the independency of the virtual inspection and the second inspection apparatus 62, the result data storage 39 from figure 2 has been given a new reference number, namely 69. Based on the second assessment, the containers are sorted to the pass path 66, the reject path 67 or the further path 68. The further path can be another retest path. It is possible that the second inspection apparatus 62 is identical to the first inspection apparatus 3. The reading unit 63, the sorting unit 65, the result data storage 69, the conveying of the containers 60 at the inlet 2 and within the second inspection apparatus 62, as well as the conveying of the pass path 66, the reject pass 67 and the further path 68 are operatively connected to the control system 64. The operative connection can be cable-based or wireless.

### REFERENCE SIGNS LIST

| | | | |
|---|---|---|---|
| 1 | Container | 37 | Processed data storage |
| 2 | Inlet | | |
| 3 | first inspection apparatus | 38 | Virtual inspection |
| | | 39 | Result data storage |
| 4 | Reading/marking unit | 40 | Inspector |
| 5 | Control | 60 | Retest container |
| 6 | Inspection | 61 | Inlet |
| 7 | inspected container | 62 | second inspection apparatus |
| 8 | Sorting unit | | |
| 9 | Pass path | 63 | Reading unit |
| 10 | Reject path | 64 | Control |
| 11 | Retest path | 65 | Sorting unit |
| 12 | Pass container | 66 | Pass path |
| 13 | Reject container | 67 | Reject path |
| 14 | Retest container | 68 | Further path |
| 15 | Raw data storage | 69 | Result data storage |
| 35 | Raw data storage | | |
| 36 | Processor | | |

## Claims

1. An inspection process comprising the steps of:
- providing at least one container (1;60) to be inspected to an inspection apparatus (3;62) through an inlet (2;61);
- identifying the at least one container (1;60);
- transmitting an identification feature of the at least one container (1;60) to a control system (5;64);
- inspecting the at least one container (1;60) for intrinsic, extrinsic or inherent defects;
- assigning the inspection data to the at least one container (1;60);
- assigning a first assessment to the at least one container (1;60) based on the result of the inspection;
- saving the identification feature together with the inspection data and the first assessment to a raw data storage (15;35) as a data package;
- sorting the at least one container (1;60) to a pass path (9) if the first assessment is "pass" or sorting the at least one container (1;60) to a reject path (10) if the first assessment is "reject" or sorting the at least one container (1;60) to a retest path (11) if the first assessment is "retest";
if the first assessment is "retest":
- processing the data package in preparation of a virtual inspection (38) by an inspector (40);
- providing the processed data package with a data space for a second assessment;
- saving the processed data package to a processed data storage (37);
- providing the processed data storage (37) to the inspector (40);
- assigning the second assessment to the data space of the processed data package;
- saving the processed data package together with the second assessment to a result data storage;
- sorting the at least one container (1;60) to one of pass path (66), reject path (67) and further path (68) based on the second assessment.

2. The process according to claim 1, wherein the first assessment and/or the second assessment comprises a classification.

3. The process according to claim 1 or 2, wherein the identifying is done by detecting a provided identification feature on the at least one container (1;60) and/or by applying an identification feature to the at least one container (1;60).

4. The process according to claim 3, wherein the identification feature can be selected from the group comprising alphanumeric code, matrix code, bar code, Inkjet coding, laser coding, electronic coding on a chip.

5. The process according to claim 4, wherein the identification feature is an electronic coding on a chip and wherein the chip comprises the raw data storage (15;35), the processed data storage (37) and the result data storage (39,69).

6. The process according to one of the preceding claims, wherein the inspecting comprises the steps of:
- taking a picture of the at least one container (1;60); and
- assessing the taken pictures based on predefined criteria.

7. The process according to claim 6, wherein the processing comprises the steps of:
- identifying critical areas of the at least one container (1;60) based on the taken picture and the predefined criteria; and
- emphasizing the critical areas in the taken picture.

8. The process according to claim 7, wherein the emphasizing is done by enlarging the critical areas and/or by increasing the contrast of the critical areas and/or by applying a color filter to the critical areas.

9. An inspection system for carrying out the inspection process of claim 1, comprising
at least one inspection apparatus (3;62) with an inlet (2;61) for a container (1;60) to be inspected,
at least one reading and/or marking unit (4;63) for identifying the container (1;60),
at least one control system (5;64),
an inspection (6) for inspecting the container (1;60) for intrinsic, extrinsic or inherent defects,
at least one sorting unit (8;65) with at least three outlets (9,10,11;66,67,68), wherein each container (1;60) can be directed to one of the at least three outlets, based on the result of the inspection,
a raw data storage (15;35) for storing a data package comprising the identification of the container, the inspection data and a first assessment, based on the result of the inspection,
a processor (36) for processing the data package,
a processed data storage (37) for storing the processed data package,
a virtual inspection (38) with a workspace for an inspector (40), who assigns a second assessment to the processed data package and
a result data storage (39;69) for storing the processed data package together with the second assessment.

## Patentansprüche

1. Ein Inspektionsverfahren, umfassend die folgenden Schritte:
- Bereitstellen mindestens eines zu inspizierenden Behälters (1;60) für eine Inspektionsvorrichtung (3;62) durch einen Einlass (2;61);
- Identifizieren des mindestens einen Behälters (1;60);
- Übermittlung eines Identifikationsmerkmals des mindestens einen Behälters (1;60) an ein Kontrollsystem (5;64);
- Inspizieren des mindestens einen Behälters (1;60) auf intrinsische, extrinsische oder inhärente Fehler;
- Zuordnen der Inspektionsdaten zu dem mindestens einen Behälter (1;60);
- Zuordnen einer ersten Bewertung zu dem mindestens einen Behälter (1;60) basierend auf dem Ergebnis der Inspektion;
- Speichern des Identifikationsmerkmals zusammen mit den Inspektionsdaten und der ersten Bewertung in einem Rohdatenspeicher (15;35) als ein Datenpaket;
- Sortieren des mindestens einen Behälters (1;60) zu einem Bestandenpfad (9), wenn die erste Bewertung "bestanden" ist, oder
Sortieren des mindestens einen Behälters (1; 60) zu einem Rückweisungspfad (10), wenn die erste Bewertung "Rückweisung" lautet, oder
Sortieren des mindestens einen Behälters (1;60) zu einem Wiederholungsprüfungspfad (11), wenn die erste Bewertung "Wiederholungsprüfung" lautet;
wenn die erste Bewertung "Wiederholungsprüfung" lautet:
- Verarbeiten des Datenpakets zur Vorbereitung einer virtuellen Inspektion (38) durch einen Inspektor (40);
- Versehen des verarbeiteten Datenpakets mit einem Datenraum für eine zweite Prüfung;
- Speichern des verarbeiteten Datenpakets in einem Speicher für verarbeitete Daten (37);
- Bereitstellen des Speichers für verarbeite Daten (37) an den Inspektor (40);
- Zuordnen der zweiten Bewertung zu dem Datenraum des verarbeiteten Datenpakets;
- Speichern des verarbeiteten Datenpakets zusammen mit der zweiten Bewertung in einem Ergebnisdatenspeicher;
- Sortieren des mindestens einen Behälters (1; 60) auf einen von Durchlasspfad (66), Rückweisungspfad (67) und weiterem Pfad (68) basierend auf der zweiten Bewertung.

2. Verfahren nach Anspruch 1, wobei die erste Bewertung und/oder die zweite Bewertung eine Klassifizierung umfasst.

3. Verfahren nach Anspruch 1 oder 2, wobei das Identifizieren durch Erfassen eines vorgesehenen Identifikationsmerkmals an dem mindestens einen Behälter (1;60) und/oder durch Aufbringen eines Identifikationsmerkmals auf den mindestens einen Behälter (1;60) erfolgt.

4. Verfahren nach Anspruch 3, wobei das Identifikationsmerkmal aus der Gruppe ausgewählt werden kann, die einen alphanumerischen Code, einen Matrixcode, einen Strichcode, eine Tintenstrahlcodierung, eine Lasercodierung und eine elektronische Codierung auf einem Chip umfasst.

5. Verfahren nach Anspruch 4, wobei das Identifikationsmerkmal eine elektronische Codierung auf einem Chip ist und wobei der Chip den Rohdatenspeicher (15;35), den Speicher für verarbeitete Daten (37) und den Ergebnisdatenspeicher (39,69) umfasst.

6. Verfahren nach einem der vorhergehenden Ansprüche, wobei das Inspizieren die folgenden Schritte umfasst:
- Aufnehmen eines Bildes des mindestens einen Behälters (1;60); und
- Auswerten der aufgenommenen Bilder anhand vorgegebener Kriterien.

7. Verfahren nach Anspruch 6, wobei das Verarbeiten die folgenden Schritte umfasst:
- Identifizieren kritischer Bereiche des mindestens einen Behälters (1;60) auf der Grundlage des aufgenommenen Bildes und der vordefinierten Kriterien; und
- Hervorheben der kritischen Bereiche in dem aufgenommenen Bild.

8. Verfahren nach Anspruch 7, wobei das Hervorheben durch Vergrößerung der kritischen Bereiche und/oder durch Erhöhung des Kontrasts der kritischen Bereiche und/oder durch Anwendung eines Farbfilters auf die kritischen Bereiche erfolgt.

9. Inspektionssystem zur Durchführung des Inspektionsverfahrens nach Anspruch 1, umfassend
mindestens eine Inspektionsvorrichtung (3;62) mit einem Einlass (2;61) für einen zu inspizierenden Behälter (1;60),
mindestens eine Lese- und/oder Markierungseinheit (4;63) zur Identifizierung des Behälters (1;60),
mindestens ein Kontrollsystem (5;64),
eine Inspektion (6) zur Überprüfung des Behälters (1;60) auf intrinsische, extrinsische oder inhärente Fehler,
mindestens eine Sortiereinheit (8;65) mit mindestens drei Auslässen (9,10,11;66,67,68), wobei jeder Behälter (1;60) auf der Grundlage des Ergebnisses der Inspektion zu einem der mindestens drei Auslässe geleitet werden kann,
einen Rohdatenspeicher (15;35) zum Speichern eines Datenpakets, das die Identifikation des Behälters, die Inspektionsdaten und eine erste Bewertung auf der Grundlage des Ergebnisses der Inspektion umfasst,
einen Prozessor (36) zur Verarbeitung des Datenpakets,
einen Speicher für verarbeitete Daten (37) zum Speichern des verarbeiteten Datenpakets,
eine virtuelle Inspektion (38) mit einem Arbeitsbereich für einen Inspektor (40), der dem verarbeiteten Datenpaket eine zweite Bewertung zuweist, und
einen Ergebnisdatenspeicher (39;69) zur Speicherung des verarbeiteten Datenpakets zusammen mit der zweiten Bewertung.

## Revendications

1. Procédé d'inspection comprenant les étapes :
- fournir au moins un conteneur (1;60) à inspecter à un appareil d'inspection (3;62) par l'intermédiaire d'une entrée (2;61) ;
- identifier l'au moins un conteneur (1;60) ;
- transmettre une caractéristique d'identification de l'au moins un conteneur (1;60) à un système de contrôle (5;64) ;
- inspecter l'au moins un conteneur (1;60) pour détecter des défauts intrinsèques, extrinsèques ou inhérents ;
- attribuer les données d'inspection à l'au moins un conteneur (1;60) ;
- attribuer une première évaluation à l'au moins un conteneur (1;60) sur la base du résultat de l'inspection ;
- enregistrer la caractéristique d'identification avec les données d'inspection et la première évaluation dans une mémoire de données brutes (15;35) sous la forme d'un ensemble de données ;
- trier l'au moins un conteneur (1;60) vers un chemin de réussite (9) si la première évaluation est "réussie" ou
trier au moins un conteneur (1;60) vers un chemin de rejet (10) si la première évaluation est "rejeter" ou trier l'au moins un conteneur (1;60) vers un chemin de retest (11) si la première évaluation est "retester" ; si la première évaluation est "retester" :
- traiter l'ensemble des données en vue d'une inspection virtuelle (38) par un inspecteur (40) ;
- fournir à l'ensemble des données traitées un espace de données pour une deuxième évaluation ;
- enregistrer l'ensemble des données traitées dans une mémoire de données traitées (37) ;
- fournir la mémoire de données traitées (37) à l'inspecteur (40) ;
- attribuer la deuxième évaluation à l'espace de données du paquet de données traitées ;
- enregistrer l'ensemble des données traitées ainsi que la deuxième évaluation dans une mémoire de données de résultat ;
- trier l'au moins un conteneur (1;60) vers l'une des chemins de réussite (66), de rejet (67) et de poursuite (68) sur la base de la deuxième évaluation.

2. Procédé selon la revendication 1, où la première évaluation et/ou la deuxième évaluation comprend une classification.

3. Procédé selon la revendication 1 ou 2, où l'identification est réalisée par la détection d'une caractéristique d'identification fournie sur le au moins un conteneur (1;60) et/ou par l'application d'une caractéristique d'identification sur le au moins un conteneur (1;60).

4. Procédé selon la revendication 3, où la caractéristique d'identification peut être choisie dans le groupe comprenant code alphanumérique, code matriciel, code à barres, codage à jet d'encre, codage laser, codage électronique sur une puce.

5. Procédé selon la revendication 4, où la caractéristique d'identification est un codage électronique sur une puce et où la puce comprend le stockage des données brutes (15;35), le stockage des données traitées (37) et le stockage des données de résultat (39,69).

6. Procédé selon l'une des revendications précédentes, où l'inspecter comprend les étapes :
- prendre une photo d'au moins un conteneur (1;60) ; et
- évaluer les photos prises sur la base de critères prédéfinis.

7. Procédé selon la revendication 6, où le traiter comprend les étapes :
- identifier les zones critiques de l'au moins un conteneur (1;60) sur la base de la photo prise et des critères prédéfinis ; et
- accentuer les zones critiques dans la photo prise.

8. Procédé selon la revendication 7, où l'accentuer est réalisée en agrandissant les zones critiques et/ou en augmentant le contraste des zones critiques et/ou en appliquant un filtre de couleur aux zones critiques.

9. Système d'inspection pour l'exécution du procédé d'inspection de la revendication 1, comprenant
au moins un appareil d'inspection (3;62) avec une entrée (2;61) pour un conteneur (1;60) à inspecter,
au moins une unité de lecture et/ou de marquage (4;63) pour identifier le conteneur (1;60),
au moins un système de contrôle (5;64),
une inspection (6) pour inspecter le conteneur (1;60) afin de détecter les défauts intrinsèques, extrinsèques ou inhérents,
au moins une unité de tri (8;65) avec au moins trois sorties (9,10,11;66,67,68), dans laquelle chaque conteneur (1;60) peut être dirigé vers l'une des trois sorties au moins, en fonction du résultat de l'inspection,
un stockage de données brutes (15;35) pour stocker un ensemble de données comprenant l'identification du conteneur, les données d'inspection et une première évaluation, sur la base du résultat de l'inspection,
un processeur (36) pour traiter l'ensemble des données,
une mémoire de données traitées (37) pour stocker l'ensemble des données traitées,
une inspection virtuelle (38) avec un espace de travail pour un inspecteur (40), qui attribue une deuxième évaluation à l'ensemble des données traitées, et
un stockage de données de résultat (39;69) pour stocker l'ensemble des données traitées avec la deuxième évaluation.
